# FASCICULE DE BREVET EUROPEEN

(11) **EP 2 948 402 B1**
(45) Date de publication et mention de la délivrance du brevet: **28.06.2017**
(21) Numéro de dépôt: 14703444.1
(22) Date de dépôt: 22.01.2014
(51) Int. Cl.: B66B 11/04

(54) **MACHINE D'ENTRAINEMENT D'UN ASCENSEUR**
MASCHINE ZUM ANTREIBEN EINES AUFZUGS
MACHINE FOR DRIVING A LIFT

(30) Priorité: 25.01.2013 FR 1350673
(43) Date de publication de la demande: 02.12.2015
(73) Titulaire: Moteurs Leroy-Somer, 16915 Angouleme (FR)
(72) Inventeur: VINCENT, Benoît, F-16430 Champniers (FR); CARRIOT, Pascal, F-16400 La Couronne (FR); BEYNAUD, Pascal, F-16290 Saint Saturnin (FR)
(74) Mandataire: Nony
(86) Numéro de dépôt international: PCT/IB2014/058468
(87) Numéro de publication internationale: WO 2014/115089

(56) Documents cités:
- EP-A1- 1 336 585
- WO-A1-2008/020835
- WO-A1-2012/176287
- JP-A- 2010 184 763
- US-A1- 2004 104 079
- US-A1- 2009 127 949

## Description

La présente invention concerne les machines électriques destinées notamment à l'entraînement d'un ascenseur.

Une machine d'entraînement d'un ascenseur comporte une poulie montée sur un arbre entraîné par un moteur électrique et un ou plusieurs freins s'opposant à une rotation de l'arbre en l'absence de fonctionnement du moteur.

De nombreuses conceptions de machines d'entraînement de câbles ou courroies d'ascenseurs ont été proposées. D'une façon générale, la machine doit être la plus compacte possible afin de permettre son installation dans des espaces de dimensions réduites.

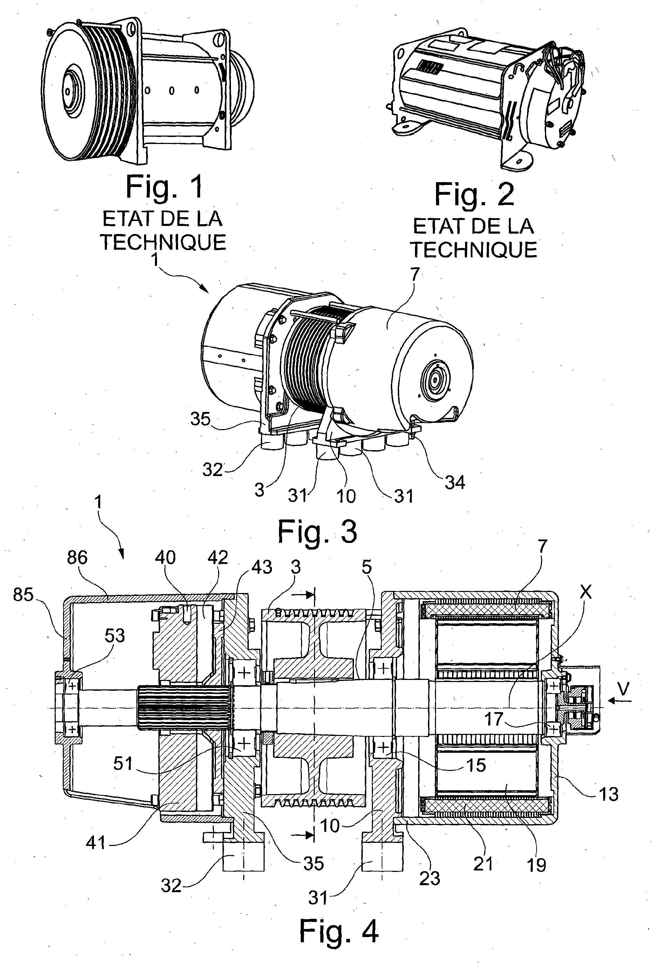

Dans certaines machines, comme illustré à la figure 1, la poulie est extérieure, en porte-à-faux, ce qui implique de monter le moteur sur un support rigide avec un surdimensionnement d'un roulement et de l'arbre. Le frein est voisin du moteur, ce qui le rend sensible à l'échauffement de ce dernier. De plus, le moteur est difficile à ventiler, car en position centrale.

Dans d'autres réalisations, telles qu'illustrées à la figure 2, la poulie est intérieure, avec un carter central rigide.

Cela impose un diamètre de poulie relativement faible, un assemblage moteur difficile, en aveugle par exemple, une difficulté à maîtriser l'entrefer du moteur et un palier central rigide difficile à réaliser avec la précision souhaitée. De plus, on rencontre une difficulté d'installation, les câbles ou la courroie devant circuler à travers des ouvertures du carter pour leur mise en place ou leur retrait.

WO 2010/126484 A1 divulgue une machine comportant un châssis porteur d'un frein et d'un moteur, disposés de part et d'autre d'une poulie. Les paliers de fixation du moteur et du frein sont définis par des montants reliés par des bras dont la section varie.

EP 543 617 A2 divulgue une machine dans laquelle les bras qui relient les paliers sont réalisés de façon à amortir le bruit de fonctionnement. WO 2008/020835 A divulgue aussi une machine d'entrainement. US 2002/0100902 A1 divulgue une machine dans laquelle la poulie est réalisée d'une seule pièce avec l'arbre et s'étend entre des paliers. Les logements recevant les roulements sont de diamètre supérieur à celui de la poulie, afin de permettre sa mise en place. Le frein et le moteur peuvent être disposés de part et d'autre de la poulie ou d'un même côté de celle-ci.

L'invention vise à proposer une machine compacte, de construction économique et de fonctionnement fiable, remédiant à tout ou partie des inconvénients des machines connues.

Selon l'un de ses aspects, l'invention a pour objet une machine électrique d'entraînement d'une poulie, comportant :
- un arbre sur lequel est montée la poulie,
- un moteur d'entraînement de l'arbre,
- un ou plusieurs freins,
- un premier palier avant de support du moteur, disposé d'un côté de la poulie, portant un roulement avant et supporté par un ou plusieurs éléments amortisseurs,
- un deuxième palier, disposé du côté opposé, portant au moins un roulement et supporté par un ou plusieurs éléments amortisseurs,
machine dans laquelle il n'y a pas de liaison rigide entre le premier palier avant de support du moteur et le deuxième palier avant.

L'invention a encore pour objet une machine électrique d'entraînement d'une poulie, comportant :
- un arbre sur lequel est montée la poulie,
- un moteur d'entraînement de l'arbre, disposé d'un côté de la poulie,
- un ou plusieurs freins disposés du côté opposé,
- un palier avant de support du moteur, portant un roulement avant, supporté par un ou plusieurs éléments amortisseurs,
- un palier de support du ou des freins, portant au moins un roulement, supporté par un ou plusieurs éléments amortisseurs.

Le ou les éléments amortisseurs sont par exemple en élastomère, éventuellement renforcé, et autorisent une déformation en compression et/ou en cisaillement de la liaison mécanique reliant le palier au socle de support de celui-ci. Le ou les éléments amortisseurs supportant un même palier, par exemple le deuxième palier avant ou le premier palier avant de support du moteur, peuvent être des plots amortisseurs, par exemple au nombre de deux à cinq et ont leurs axes préférentiellement situés dans un même plan, perpendiculaire à l'axe de rotation.

La disposition du ou des éléments amortisseurs permet par déformation de ceux-ci une certaine liberté de mouvement du deuxième palier avant et du premier palier avant de support du moteur, notamment en basculement autour d'un axe perpendiculaire à l'axe de rotation.

Le ou les éléments amortisseurs sont préférentiellement des plots ; toutefois, on peut encore utiliser une semelle en élastomère, par exemple, interposée entre le ou les paliers et le socle de support.

A la limite, une même semelle peut supporter à la fois le premier palier avant de support du moteur et le deuxième palier avant.

L'invention permet de reprendre les efforts de suspension au plus près de la poulie et réduit la flexion induite sur l'arbre par la tension des câbles ou de la courroie qui reposent sur la poulie, ce qui permet de réduire le diamètre de l'arbre et celui des roulements.

L'invention permet également d'éviter l'utilisation d'un carter central rigide complexe à fabriquer et qui limiterait le diamètre de la poulie.

Un autre avantage de l'invention est que la moindre flexion de l'arbre facilite l'obtention d'un entrefer de dimension bien maîtrisée côté moteur.

Dans les machines selon l'invention, il n'y a pas de liaison rigide entre les premier et deuxième paliers de support, et quand le ou les freins sont supportés par le deuxième palier de support selon l'un des aspects de l'invention, il n'y pas de liaison rigide entre les paliers de support du moteur et de support du ou des freins, contrairement aux réalisations telles que décrites dans WO 2010/126484 par exemple, où les paliers sont reliés par des bras rigides sur leurs faces en regard. La présence du ou des éléments amortisseurs permet, grâce à leur déformabilité, de compenser un désalignement éventuel des paliers disposés de part et d'autre de la poulie et de minimiser les contraintes exercées sur les roulements. Le montage de la machine s'en trouve simplifié.

L'invention peut également faciliter le montage d'un peson permettant de connaître le couple exercé sur le frein à l'arrêt. En effet, le peson peut être disposé de façon à mesurer un déplacement de la machine induit par une déformation du ou des éléments amortisseurs. Le peson est par exemple un capteur inductif disposé de façon à se déplacer en fonction de la charge à laquelle sont soumis le ou les éléments amortisseurs. Il est par exemple fixé sur le palier en étant décalé au mieux d'un plan médian longitudinal de la machine ; le capteur peut détecter son rapprochement ou éloignement du socle de support de la machine.

En connaissant le couple exercé sur le frein, le moteur peut être commandé au démarrage de façon à exercer un couple égal au couple exercé sur le frein, avant desserrage du frein, de façon à éviter les à-coups.

Enfin, la machine repose de façon stable en compression sur le ou les éléments amortisseurs et il n'y a pas de moment de basculement. L'installation par l'ascensoriste de la machine s'en trouve facilitée.

De préférence, le ou les éléments amortisseurs sont placés sensiblement au droit des roulements les plus proches de la poulie, de sorte que la charge radiale est transférée au socle de support sans charger les roulements additionnels de guidage de l'arbre.

L'invention permet aussi d'éviter un surdimensionnement mécanique, notamment au niveau des roulements et de l'arbre, par exemple concernant la section de ce dernier et/ou la nuance d'acier utilisée.

L'installation des câbles ou de la courroie est facilitée en l'absence d'entrave au montage de ceux-ci.

La maîtrise des dimensions de l'entrefer du moteur améliore le confort en réduisant les vibrations et le bruit.

L'invention permet également de mieux maîtriser l'entrefer du ou des freins et de réduire ainsi l'usure et le bruit.

Le moteur peut comporter un palier arrière, portant un roulement arrière.

La machine peut comporter plusieurs freins.

De préférence, le ou les freins sont supportés par le deuxième palier avant.

Un avantage de disposer le moteur et le ou les freins d'un côté et de l'autre de la poulie est de réduire le risque de transmission de chaleur entre le moteur et le ou les freins. De plus, il est plus facile d'intégrer un ventilateur pour refroidir le moteur, compte-tenu de l'espace disponible côté moteur.

Tous les freins peuvent être disposés d'un même côté du deuxième palier avant.

En variante, le ou les freins sont supportés par le palier arrière.

Un avantage de disposer le ou les freins derrière le moteur est de faciliter le transfert du couple du ou des freins vers le moteur lors de phases d'arrêt.

Lorsque le moteur et le ou les freins sont disposés d'un côté et de l'autre de la poulie, le transfert de couple entre le moteur et le frein ou vice versa, tend à créer un déphasage angulaire entre le moteur et le frein.

Le deuxième palier avant peut porter un roulement, par exemple à double rangée.

De préférence, le deuxième palier avant comporte deux roulements séparés.

En variante, le premier palier avant de support porte un roulement à billes à une seule rangée. Cette solution est préférable dans le cas où le ou les freins sont supportés uniquement par le palier arrière, mais vaut aussi pour le cas où le deuxième palier avant supporte le ou les freins.

Comme indiqué ci-dessus, la machine peut avantageusement comporter un peson disposé de manière à mesurer la charge tendant à déformer le ou les éléments amortisseurs.

La machine peut être dépourvue de carter autour de la poulie.

Le premier palier avant de support du moteur et le deuxième palier avant reposent de préférence sur un socle commun. Ce socle peut être traversé par une ouverture de passage de câbles ou d'une courroie engagée sur la poulie.

L'invention pourra être mieux comprise à la lecture de la description qui va suivre, d'un exemple de mise en oeuvre non limitatif de celle-ci, ainsi qu'à l'examen du dessin annexé, sur lequel :
- les figures 1 et 2 représentent des machines connues, respectivement à poulie extérieure et à carter central rigide,
- la figure 3 représente en perspective un exemple de machine réalisée conformément à l'invention,
- la figure 4 est une coupe longitudinale, schématique, de la machine de la figure 3,
- la figure 5 est une vue de face selon V de la figure 3,
- la figure 6 représente isolément, en coupe axiale, un plot amortisseur,
- les figures 7 et 8 sont des vues analogues à la figure 4, de variantes de réalisation,
- la figure 9 représente un détail de réalisation d'une variante d'élément amortisseur et
- les figures 10 et 11 sont des vues analogues à la figure 4, de variantes de réalisation.

La machine 1 selon l'invention représentée sur les figures 3 à 5 comporte une poulie 3 montée sur un arbre 5 tournant autour d'un axe de rotation X, qui est de préférence horizontal.

La poulie 3 peut être montée par tout moyen connu adapté sur l'arbre 5, par exemple par frettage, coincement sur cône ou cannelures et butée.

La machine 1 comporte d'un côté de la poulie 3 un moteur 7 comportant un premier palier avant 10 de support du moteur 7 et un palier arrière 13 portant des roulements respectifs avant 15 et arrière 17, par exemple des roulements à billes.

Le moteur 7 comporte également un rotor 19 et un stator 21, lequel est porté par un carter 23 s'étendant entre le premier palier avant 10 et le palier arrière 13.

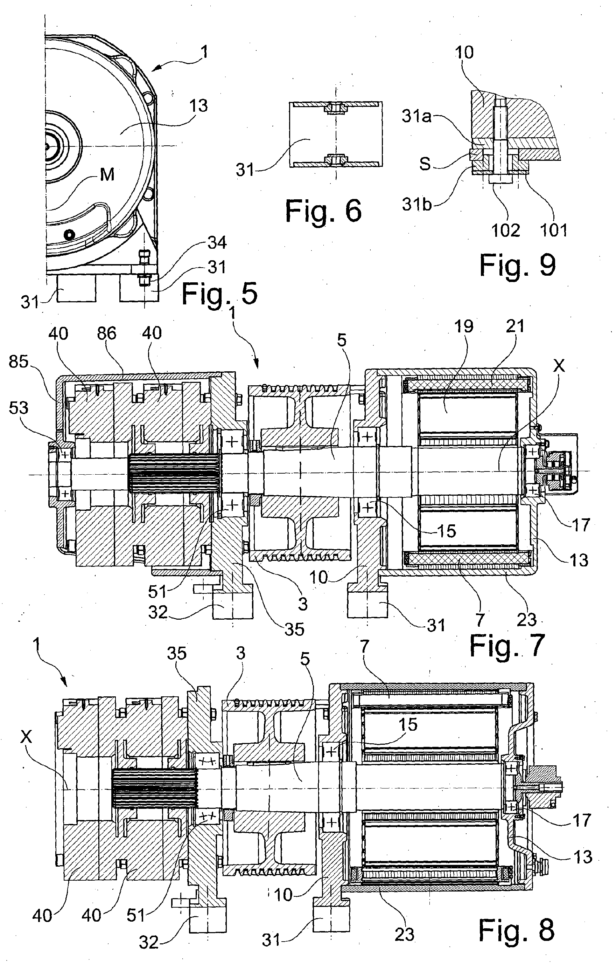

Le carter 23 et le palier arrière 13 peuvent être réalisés en une seule pièce, comme illustré, ou sous forme de pièces assemblées, comme illustré à la figure 8.

Le rotor 19 peut être à aimants permanents, notamment à aimants en ferrites ou à terres rares. Le rotor peut être à concentration de flux ou à aimants montés en surface. Le stator peut être à bobinage distribué ou concentré. Le moteur est de préférence à bobinage triphasé.

Le moteur peut entraîner un ventilateur non représenté sur le dessin, ou être refroidi par un ventilateur entraîné indépendamment de la rotation de l'arbre.

Le palier avant 10 est monté sur un socle non représenté par l'intermédiaire d'éléments amortisseurs 31.

Les éléments amortisseurs 31 sont par exemple des plots tels que celui représenté à la figure 6, comportant un bloc en élastomère, par exemple du caoutchouc, sur lequel sont fixées deux rondelles métalliques porteuses d'un écrou ou d'une tige filetée.

Des plots amortisseurs pouvant convenir sont commercialisés par la société PAULSTRA sous la marque RADIALFLEX, et permettent un travail de l'élastomère en compression axiale et/ou en cisaillement radial.

Le socle peut être réalisé avec une ouverture pour le passage des câbles ou de la courroie reliés à la cabine d'ascenseur. Des boulons et/ou écrous non représentés peuvent sécuriser la fixation du premier palier avant 10 sur le socle, ces boulons étant fixés aux plots amortisseurs 31, qui supportent ainsi le poids du moteur.

La machine 1 comporte, du côté opposé au moteur, un deuxième palier avant 35 supportant un ou éventuellement plusieurs freins 40.

Chaque frein 40, de type axial connu en lui-même, comporte une culasse 41 logeant un électroaimant non représenté sur le dessin, pour déplacer lorsqu'excité une armature 42 portant une garniture de frein. L'armature est sollicitée en appui par des ressorts contre un disque 43 tournant avec l'arbre 5.

Le ou les freins 40 sont par exemple à manque de courant, c'est-à-dire qu'ils bloquent l'arbre en rotation lorsque non alimentés.

Le deuxième palier avant 35 porte un roulement 51 et repose sur le socle par l'intermédiaire d'éléments amortisseurs 32.

Un deuxième roulement 53 peut être porté par un palier 85 qui peut être réalisé d'une seule pièce avec un carter 86 de protection du ou des freins 40.

Les éléments amortisseurs 32 sont de préférence, comme illustré, identiques aux plots amortisseurs 31.

La machine est avantageusement équipée d'un peson 34 qui permet de connaître le couple exercé sur la poulie lorsque le moteur est à l'arrêt. Cela peut permettre de faire démarrer le moteur sans à coup, comme indiqué plus haut.

Le peson 34 est par exemple un capteur inductif, de préférence à sortie proportionnelle, fixé à la base du palier 10, à proximité du bord le plus éloigné du plan longitudinal médian M. Ce capteur peut mesurer sa distance au socle de support, qui est représentative de l'état de déformation du ou des éléments amortisseurs 31 et 32.

Dans la variante de réalisation illustrée à la figure 7, la machine 1 comporte deux freins 40.

Dans la variante de réalisation de la figure 8, le palier arrière 13 est rapporté sur le carter 29. Le deuxième palier 35 avant supportant le ou les freins est réalisé pour accueillir un roulement 51 à double rangée.

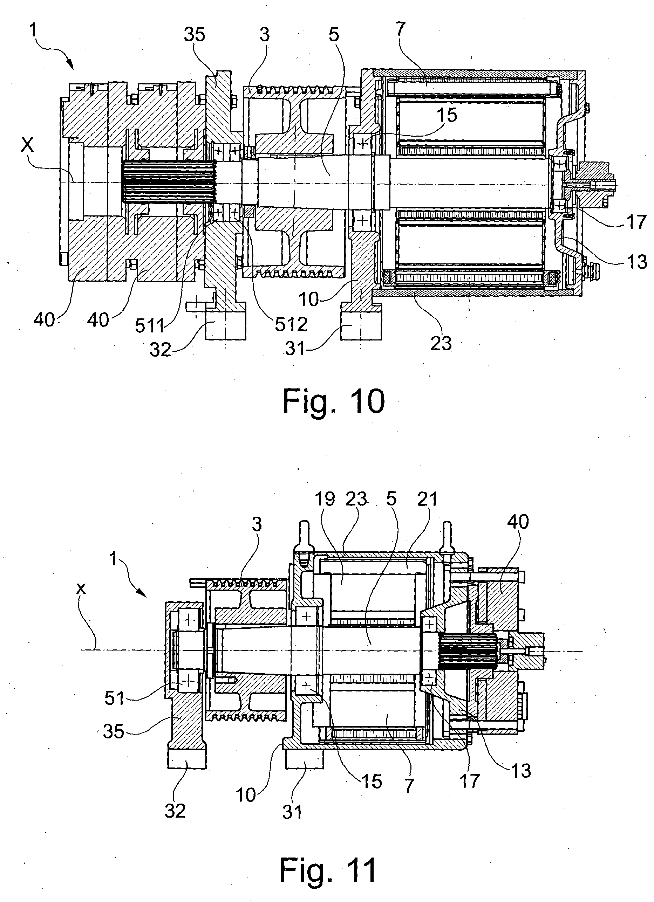

Dans la variante de réalisation de la figure 10, le deuxième palier 35 avant comporte deux roulements séparés 511 et 512.

Dans une variante non illustrée, la machine ne comporte qu'un seul palier côté moteur, à savoir le premier palier avant 10, le roulement 15 pouvant dans ce cas être à double rangée ou le premier palier pouvant comporter deux roulements séparés.

Dans la variante de réalisation de la figure 11, le ou éventuellement les freins sont supportés par le palier arrière 13.

Le deuxième palier avant 32 comporte un roulement 51 à billes à une rangée.

On a illustré sur la figure 9 une variante de réalisation d'élément amortisseur, par exemple pour le premier palier avant 10 comme illustré, étant entendu que cela s'applique aussi au deuxième palier avant 35.

L'élément amortisseur comporte deux patins en élastomère 31a et 31b. Le premier 31a s'interpose entre le palier 10 et le socle S de réception de la machine. Le deuxième 31b s'interpose entre le socle S et une rondelle 101, maintenue par une vis 102 vissée dans le palier 10. Le patin 31a peut se présenter sous la forme d'une semelle au contact de toute la face inférieure du palier 10. Le patin 31b peut être étagé, afin de se centrer dans le perçage du socle S permettant le passage de la vis 102.

Bien entendu, on peut apporter de nombreuses modifications aux exemples illustrés sans sortir du cadre de la présente invention.

Par exemple, le nombre et la nature des freins peuvent être modifiés. On peut par exemple utiliser des freins à mâchoire et non des freins à disque.

Le carter du moteur peut être réalisé d'une seule pièce avec l'un ou l'autre des paliers, par exemple par usinage ou fonderie.

## Revendications

1. Machine électrique (1) d'entraînement d'une poulie (3), comportant :
- un arbre (5) sur lequel est montée la poulie,
- un moteur (7) d'entraînement de l'arbre (5),
- un ou plusieurs freins (40),
- un premier palier avant (10) de support du moteur (7), disposé d'un côté de la poulie (3), portant un roulement avant (15) et supporté par un ou plusieurs éléments amortisseurs (31),
- un deuxième palier avant (35), disposé du côté opposé, portant au moins un roulement (53) et supporté par un ou plusieurs éléments amortisseurs (32),**caractérisé en ce que** dans la machine il n'y a pas de liaison rigide entre le premier palier avant (10) de support du moteur (7) et le deuxième palier avant (35).

2. Machine selon la revendication 1, le moteur (7) comportant un palier arrière (13), portant un roulement arrière (17).

3. Machine selon la revendication 1 ou 2, le ou les freins (40) étant supportés par le deuxième palier avant (35).

4. Machine selon l'une quelconque des revendications précédentes, tous les freins (40) étant disposés d'un même côté du deuxième palier avant (35).

5. Machine selon la revendication 2, le ou les freins (40) étant supportés par le palier arrière (13).

6. Machine selon l'une quelconque des revendications précédentes, comportant plusieurs freins (40).

7. Machine selon l'une quelconque des revendications précédentes, le deuxième palier avant (35) portant un roulement à double rangée.

8. Machine selon l'une quelconque des revendications précédentes, le deuxième palier avant (35) portant un roulement à billes à une rangée.

9. Machine selon l'une quelconque des revendications précédentes, le deuxième palier avant (35) portant deux roulements séparés (511, 512).

10. Machine selon l'une quelconque des revendications précédentes, comportant un peson (34) disposé de manière à mesurer un déplacement de la machine induit par la charge pesant sur le ou les éléments amortisseurs (31, 32).

11. Machine selon l'une quelconque des revendications précédentes, étant dépourvue de carter autour de la poulie (3).

12. Machine selon l'une quelconque des revendications précédentes, le premier palier avant (10) de support du moteur (7) et le deuxième palier avant (35) reposant sur un socle commun.

13. Machine selon l'une quelconque des revendications précédentes, le ou les éléments amortisseurs (31, 32) étant constitués par des plots comportant un bloc en élastomère.

14. Utilisation d'une machine (1) telle que définie dans l'une quelconque des revendications 1 à 13, pour l'entraînement d'un ascenseur, la poulie entraînant des câbles ou une courroie reliés à la cabine de l'ascenseur.

## Patentansprüche

1. Elektrische Maschine (1) zum Antreiben einer Seilrolle (3), mit:
- einer Welle (5), auf welcher die Seilrolle montiert ist,
- einem Motor (7) für den Antrieb der Welle (5),
- ein oder mehreren Bremsen (40),
- einem ersten vorderen Lager (10) zur Abstützung des Motors (7), das auf einer Seite der Seilrolle (3) angeordnet ist und ein vorderes Wälzlager (15) aufweist und durch ein oder mehrere Dämpferelemente (31) gehalten ist,
- einem zweiten vorderen Lager (35), das auf der entgegengesetzten Seite angeordnet ist und wenigstens ein Wälzlager (53) aufweist und durch ein oder mehrere Dämpferelemente (32) gehalten ist,
**dadurch gekennzeichnet, dass** es in der Maschine keine starre Verbindung zwischen dem ersten vorderen Lager (10) zur Abstützung des Motors (7) und dem zweiten vorderen Lager (35) gibt.

2. Maschine nach Anspruch 1, bei welcher der Motor 7 ein hinteres Lager (13) aufweist, das ein hinteres Wälzlager (17) trägt.

3. Maschine nach Anspruch 1 oder 2, bei der die Bremse oder Bremsen (40) durch das zweite vordere Lager (35) gehalten sind.

4. Maschine nach einem der vorstehenden Ansprüche, bei der alle Bremsen (40) auf derselben Seite des zweiten vorderen Lagers (35) angeordnet sind.

5. Maschine nach Anspruch 2, bei der die Bremse oder Bremsen (40) durch das hintere Lager (13) gehalten sind.

6. Maschine nach einem der vorstehenden Ansprüche, mit mehreren Bremsen (40).

7. Maschine nach einem der vorstehenden Ansprüche, bei der das zweite vordere Lager (35) ein zweireihiges Kugellager trägt.

8. Maschine nach einem der vorstehenden Ansprüche, bei der das zweite vordere Lager (35) ein einreihiges Kugellager trägt.

9. Maschine nach einem der vorstehenden Ansprüche, bei der das zweite vordere Lager (35) zwei getrennte Wälzlager (511, 512) trägt.

10. Maschine nach einem der vorstehenden Ansprüche, mit einer Waage (34), die so angeordnet ist, dass sie eine Verlagerung der Maschine misst, die durch die auf dem Dämpferelement oder den Dämpferelementen (31, 32) ruhende Last induziert ist.

11. Maschine nach einem der vorstehenden Ansprüche, ohne Gehäuse um die Seilrolle (39).

12. Maschine nach einem der vorstehenden Ansprüche, bei der das erste vordere Lager (10) zur Abstützung des Motors (7) und das zweite vordere Lager (35) auf einem gemeinsamen Sockel gelagert sind.

13. Maschine nach einem der vorstehenden Ansprüche, bei der das Dämpferelement oder die Dämpferelemente (31, 32) durch Klötze gebildet sind, die einen Block aus elastomerem Material aufweisen.

14. Verwendung einer Maschine (1) nach einem der Ansprüche 1 bis 13 für den Antrieb eines Aufzugs, bei welcher die Seilrolle Aufzugseile oder einen mit der Kabine des Aufzugs verbundenen Treibriemen antreibt.

## Claims

1. Electrical machinery (1) for driving a pulley (3), including:
- a shaft (5) on which the pulley is mounted,
- a motor (7) for driving the shaft (5),
- one or more brakes (40),
- a first front bearing (10) supporting the motor (7), disposed on one side of the pulley (3), carrying a front rolling bearing (15) and supported by one or more damper elements (31),
- a second front bearing (35), disposed on the opposite side, carrying at least one rolling bearing (53) and supported by one or more damper elements (32),
**characterized in that** in the machinery there is no rigid connection between the first front bearing (10) supporting the motor (7) and the second front bearing (35).

2. Machinery according to Claim 1, the motor (7) including a rear bearing (13) carrying a rear rolling bearing (17).

3. Machinery according to Claim 1 or 2, the brake or brakes (40) being supported by the second front bearing (35).

4. Machinery according to any one of the preceding claims, all the brakes (40) being disposed on a same side of the second front bearing (35).

5. Machinery according to Claim 2, the brake or brakes (40) being supported by the rear bearing (13).

6. Machinery according to any one of the preceding claims, including a plurality of brakes (40).

7. Machinery according to any one of the preceding claims, the second front bearing (35) carrying a rolling bearing of the two-row type.

8. Machinery according to any one of the preceding claims, the second front bearing (35) carrying a rolling bearing of the single-row type.

9. Machinery according to any one of the preceding claims, the second front bearing (35) carrying two separate rolling bearings (511, 512).

10. Machinery according to any one of the preceding claims, including a balance (34) disposed so as to measure a displacement of the machinery induced by the load weighing down the damper element or elements (31, 32).

11. Machinery according to any one of the preceding claims, having no casing around the pulley (3).

12. Machinery according to any one of the preceding claims, the first front bearing (10) supporting the motor (7) and the second front bearing (35) resting on a common base.

13. Machinery according to any one of the preceding claims, the damper element or elements (31, 32) being constituted by studs including an elastomer block.

14. Use of a machinery (1) as defined any one of Claims 1 to 13 for driving a lift, the pulley driving cables or a belt connected to the lift car.
